# EUROPÄISCHE PATENTSCHRIFT

(11) **EP 0 928 250 B1**
(45) Veröffentlichungstag und Bekanntmachung des Hinweises auf die Patenterteilung: **12.12.2001**
(21) Anmeldenummer: 97909343.2
(22) Anmeldetag: 01.10.1997
(51) Int. Cl.: B60D 1/66, B60S 9/18, B60D 1/46

(54) **DREHVORRICHTUNG**
ROTATING DEVICE
DISPOSITIF DE ROTATION

(30) Priorität: 02.10.1996 DE 19640685
(43) Veröffentlichungstag der Anmeldung: 14.07.1999
(73) Patentinhaber: Lebold, Willi, 70619 Stuttgart (DE)
(72) Erfinder: LEBOLD, Willi, D-70619 Stuttgart (DE); LAULE, Josef, D-79822 Titisee-Neustadt (DE)
(74) Vertreter: Jeck, Anton, Dipl.-Ing.
(86) Internationale Anmeldenummer: EP9705384
(87) Internationale Veröffentlichungsnummer: WO9814340

(56) Entgegenhaltungen:
- FR-A- 1 289 604
- US-A- 3 779 579
- US-A- 4 623 125
- US-A- 4 871 183
- US-A- 5 067 692

## Beschreibung

Die Erfindung betrifft eine Drehvorrichtung nach dem Oberbegriff des Anspruchs 1.

Derartige Drehvorrichtungen sind aus der FR 1289604, der US 4871183, der US 5067692 und der US 4623125 bekannt.

Bei der FR 1289604 besteht die Drehvorrichtung für eine Fahrzeugdeichsel aus zwei über einen Drehzapfen verbundene Scheiben. An der vorderen Scheibe sind ein Radhalter und ein Verstellhebel befestigt. Außermittig ist auf der vorderen Scheibe eine Arretierungsvorrichtung angeordnet, die in Rastausnehmungen der hinteren Scheibe automatisch (durch Federwirkung) eingreift. Die Arretierungsvorrichtung hat ferner einen Arretierungsbolzen, der der Wirkung einer Feder ausgesetzt und mit einer Handhabe gegen die Federwirkung aus den Raststellungen ausrastbar ist.

Die Drehvorrichtung für eine Fahrzeugdeichsel gemäß der US 4871183 besteht aus zwei über einen Drehzapfen verbundene, viereckige Platten, wobei die vordere Platte einen Radhalter und eine Arretierungsvorrichtung trägt. Die Arretierungsvorrichtung besteht aus einem Bügel, dessen Enden gegen die Wirkung von Federn in Rastausnehmungen der hinteren Platte automatisch eingreifen.

Den Drehvorrichtungen der beiden vorgenannten Schriften ähnliche Drehvorrichtungen werden in der US 5067692 und der US 4623125 beschrieben, wobei in der letztgenannten Schrift die Arretierungsvorrichtung eine den Arretierungsbolzen aufnehmende Hülse aufweist.

Diese bekannten Drehvorrichtungen haben den Nachteil, dass die Stabilität der Stütze nicht ausreichend ist und dass seitlich hervorstehende Teile an der Arretierungsvorrichtung vorhanden sind, die eine Verletzungsgefahr bilden.

Die Aufgabe der Erfindung besteht darin, eine Drehvorrichtung der im Oberbegriff des Anspruchs 1 genannten Art zu schaffen, deren Stabilität verbessert ist und bei der seitlich hervorstehende Teile der Arretierungsvorrichtung vermieden werden.

Diese Aufgabe wird mit den Merkmalen des Anspruchs 1 gelöst.

Die Töpfe haben die Vorteile, dass sie sowohl die an der Deichsel wirkende, horizontale Kraft als auch die vertikale Kraft der Deichsel hervorragend aufnehmen können und dass sie die Voraussetzung für eine bequeme und sichere Handhabung der Drehvorrichtung bieten. Außerdem geben die Töpfe optisch ein besseres Bild ab.

Zum Verschwenken der Stütze braucht der Arretierungsbolzen der Arretierungsvorrichtung nur kurz aus der betreffenden Rastausnehmung ausgeklinkt werden, und nach Erreichen der anderen Endlage der Stütze rastet der Arretierungsbolzen automatisch in die dieser Endlage zugeordnete Rastausnehmung ein. Die scheibenförmige Ausbildung der Elemente trägt zur Stabilisierung der Stütze bei.

Gemäß einer weiteren Ausbildung der Erfindung weist das mit der Stütze verbundene Element an der Stelle des Drehlagers einen zum Drehzapfen hin vertieften Bereich auf. Dadurch kann das mit der Stütze verbundene Element einfach und in raumsparender Weise auf dem Drehzapfen gesichert und die Länge des Drehzapfens kurz gehalten werden.

Eine weitere Ausbildung der Erfindung ist so gestaltet, dass der mit der Deichsel verbundene Topf den größeren Durchmesser aufweist, an seiner Topfwand mit der Arretierungsvorrichtung verbunden ist und an seiner Topfwand eine Bohrung zum Durchtritt des Arretierungsbolzens aufweist und dass der mit der Stütze verbundene Topf an seiner Topfwand mit zwei die Rastausnehmungen darstellenden Bohrungen für den Eingriff des Arretierungsbolzens versehen ist. Die Arretierungsvorrichtung hat somit eine bewegliche Lage an der Deichsel und ist daher einfach zu bedienen. Der Topf mit größerem Durchmesser könnte allerdings auch mit dem Stützrohr verbunden sein.

Gemäß einer weiteren zweckmäßigen Ausgestaltung der Erfindung ist der Arretierungsbolzen der Wirkung einer Feder ausgesetzt und mittels einer Handhabe gegen die Federwirkung aus den Raststellungen ausrastbar.

Eine weitere zweckmäßige Ausgestaltung der Erfindung ist dadurch gekennzeichnet, dass die Arretierungsvörrichtung eine den Arretierungsbolzen aufnehmende Hülse aufweist, daß das eine Hülsenende mit dem mit der Deichsel bzw. mit dem Stützrohr verbundenen Topf fest verbunden ist, daß das andere Hülsenende mit einer den Durchtritt des Arretierungsbolzens ermöglichenden Schraubkappe, allgemein Zylinder, abgeschlossen ist, daß die Feder als Schraubendruckfeder ausgebildet, um den Arretierungsbolzen gewunden und mit seinem einen Ende am Arretierungsbolzen sowie mit seinem anderen Ende an der Schraubkappe gelagert ist und daß die Handhabe mit dem topffernen Ende des Arretierungsbolzens verbunden ist.

Eine weitere zweckmäßige Ausgestaltung der Erfindung ist so getroffen, daß das untere Ende der Handhabe kreisscheibenförmig und als Gabel ausgebildet ist und sich an der Schraubkappe abstützt und daß der Arretierungsbolzen in der Gabel mittels einer exzentrisch in der Gabelscheibe angeordneten Stiftverbindung aufgenommen ist.

Vorzugsweise kann die Drehvorrichtung so angeordnet werden, daß die Handhabe der Arretierungsvorrichtung und die Deichsel mit einer Hand gleichzeitig zu ergreifen sind.

Die Erfindung wird nun anhand von Ausführungsbeispielen näher erläutert. Es zeigen:
- Fig. 1: eine Seitenansicht eines Fahrzeugdeichselteils, einer Stütze und einer ersten Ausführungsform der Drehvorrichtung gemäß der Erfindung, wobei sich die Stütze in der horizontalen Endlage befindet,
- Fig. 2: eine verkürzte Draufsicht auf die Anordnung der Fig. 1,
- Fig. 3: die Anordnung der Fig. 1 mit der Stütze in der vertikalen Endlage,
- Fig. 4: einen Schnitt durch eine zweite Ausführungsform der Drehvorrichtung und deren Arretierungsvorrichtung gemäß der Erfindung und
- Fig. 5: eine Seitenansicht der Handhabe der Arretierungsvorrichtung.

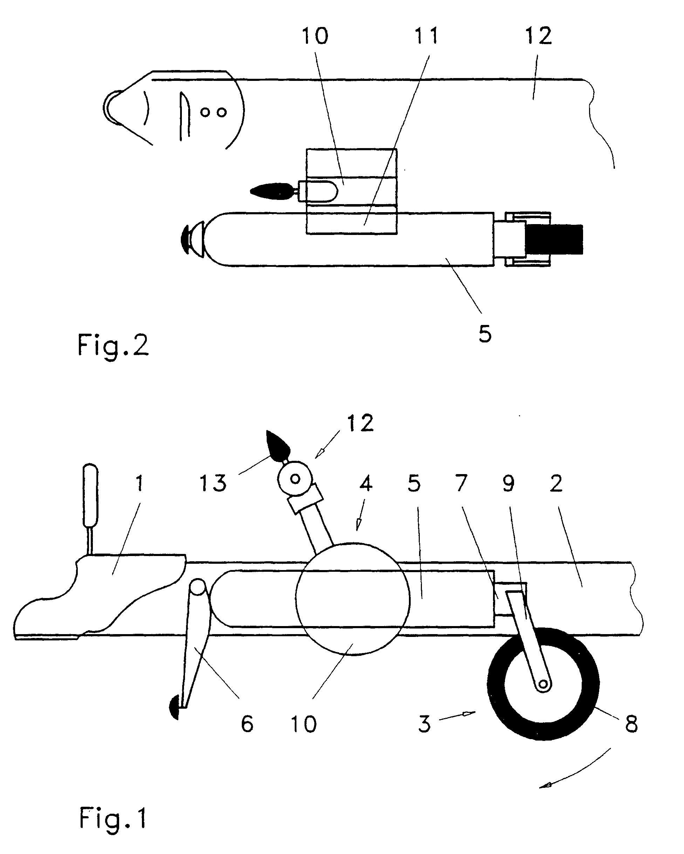

Die Anordnung in Fig. 1 weist eine mit einer Kupplung 1 versehene Deichsel 2 in Form eines Rohrs auf, wie sie beispielsweise an einachsigen Fahrzeuganhängern, z.B. Wohnwagen, angebracht ist. Um solche Deichseln stützen und somit den Fahrzeuganhänger besser rangieren zu können, ist an der Deichsel 2 eine in horizontaler Lage gezeigte Stütze 3 über eine Drehvorrichtung 4 angebracht.

Die Stütze 3 besteht aus einem Rohr 5, in dem eine nicht dargestellte Spindel angeordnet ist, die einerseits mit einer Kurbel 6 verbunden und andererseits mit einem in Rohr 5 geführten Gabelhalter 7 im Eingriff steht. Am Gabelhalter 7 ist eine mit einem Laufrad 8 versehene Gabel 9 befestigt. Durch Drehung an der Kurbel 6 ist der Gabelhalter 7 mit Gabel 9 und Laufrad 8 in Längsrichtung des Rohrs 5 verstellbar, so daß die richtige Stützhöhe eingestellt werden kann. Anstelle einer derartigen Ausführung der Stütze kann diese auch nur als Stützrohr mit einem Bodenteller ausgebildet sein.

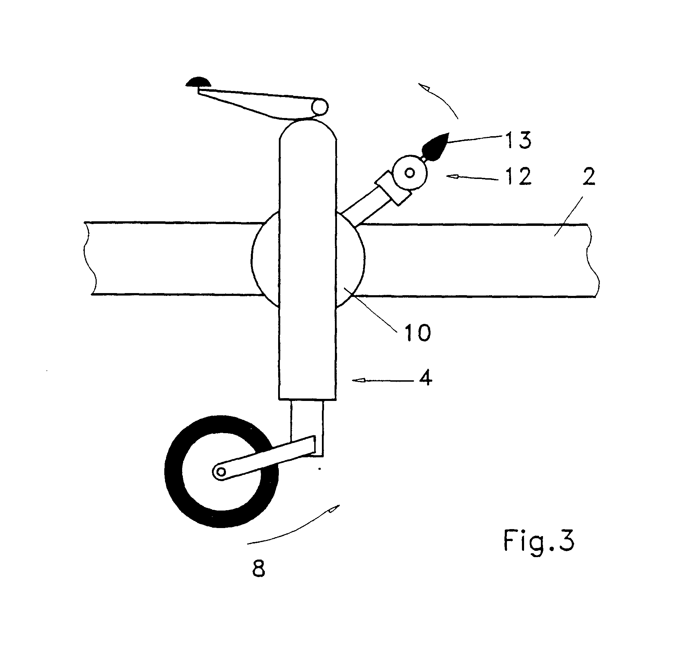

Die Drehvorrichtung 4 besteht aus zwei scheibenförmigen Elementen 10, 11 (s. auch Fig. 2), von denen das Element 11 fest mit dem Rohr 5 und das Element 10 fest mit der Deichsel 2 verbunden, beispielsweise verschraubt oder verschweißt, ist. Das Element 11 ist in hier nicht dargestellter Weise mit einem zentralen Drehzapfen versehen, auf dem das Element 10 gelagert ist. Das Element 11 trägt eine hier nicht näher dargestellte Arretierungsvorrichtung 12 mit einer Handhabe 13. Die Arretierungsvorrichtung 12 greift in zwei hier nicht dargestellte Rastausnehmungen des Elements 10 automatisch ein. Die Arretierungsvorrichtung 12 ist so ausgebildet, daß durch Kippen der Handhabe 13 die Verrastung der beiden Elemente 10, 11 aufgehoben und dann durch Schieben der Handhabe 13 in Richtung des Pfeils in Fig. 1 die Stütze 4 in die in Fig. 3 gezeigte vertikale Endlage gedreht werden kann. In ähnlicher Weise läßt sich die Stütze 4 in Richtung der Pfeile in Fig. 3 wieder in die in Fig. 1 dargestellte horizontale Endlage zurückbringen. Die Arretierungsvorrichtung 4 dient dabei gleichzeitig als Drehhebel.

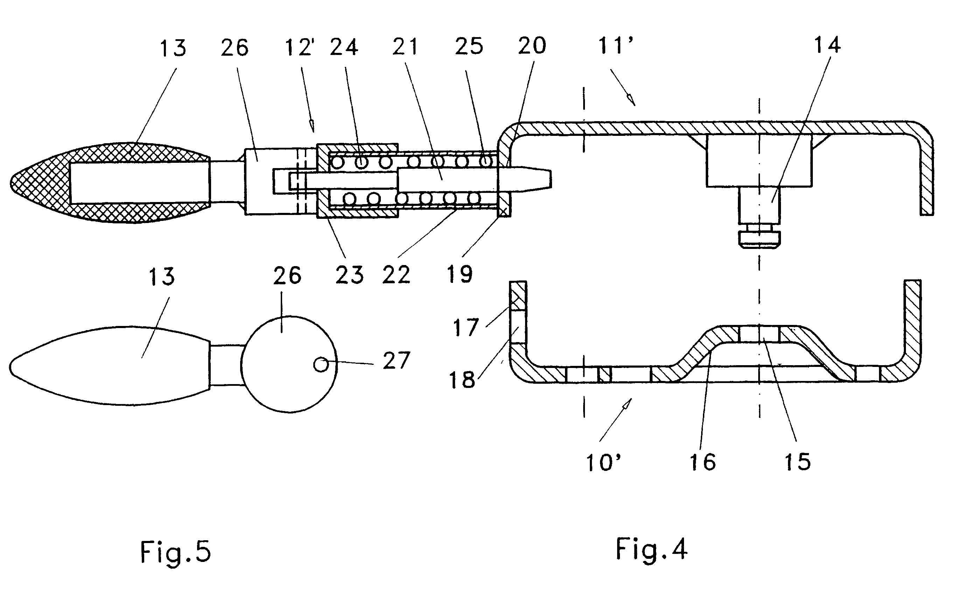

Eine weitere Ausführungsform der Drehvorrichtung mit der Arretierungsvorrichtung ist in Fig. 4 dargestellt. Hier ist das mit der Stütze 4 verbundene, scheibenförmige Element als Topf 11' und das mit der Deichsel verbundene, scheibenförmige Element als Topf 10' ausgebildet. Der Topf 11' ist mit einem zentralen Drehzapfen 14 versehen, auf dem der Topf 10' mit einer zentralen Bohrung 15 gelagert wird, wobei die offenen Seiten der Töpfe 10', 11' einander zugekehrt sind und der Außendurchmesser des Topfes 10' nur geringfügig kleiner als der Innendurchmesser des Topfes 11' ist; danach kann der Topf 10' am Drehzapfen 14 gesichert werden. Zweckmäßigerweise ist ein die Bohrung 15 aufweisender Bereich des Topfes 10' in Richtung auf den Drehzapfen 14 vertieft angeordnet.

Die Topfwand 17 des Topfes 10' ist mit zwei als Rastausnehmungen dienende Bohrungen versehen, von denen die eine Bohrung 18 in Fig. 4 dargestellt und die andere Bohrung in Fig. 4 nicht dargestellt und um 90° versetzt angeordnet ist. Die Topfwand 19 des Topfes 11' ist mit einer Bohrung 20 versehen, durch die ein Arretierungsbolzen 21 führbar ist. Dieser Bolzen ist auch durch die Bohrung 18 oder die andere Bohrung der Topfwand 17 führbar.

An der Stelle der Bohrung 20 ist die Arretierungsvorrichtung 12' befestigt, beispielsweise angeschweißt. Diese Vorrichtung weist eine Hülse 22 auf, die mit einem Ende am Topf 11' befestigt und am anderen Ende mit einer den Durchtritt des Arretierungsboizens 21 ermöglichenden Schraubkappe 23 abgeschlossen ist. In der Hülse 22 sind der Arretierungsbolzen 21 und eine um diese gewundene Schraubendruckfeder 24 angeordnet. Diese Feder stützt sich mit ihrem einen Ende am Boden der Schraubkappe 23 und mit ihrem anderen Ende an einem mit dem Arretierungsbolzen 21 verbundenen Teller 25 ab. Das aus der Schraubkappe 23 herausragende Ende des Arretierungsbolzens 21 ist mit einer Querbohrung versehen.

Die Handhabe 13 ist an ihrem einen Ende mit einer kreisscheibenförmigen Gabel 26 versehen, in der Querbohrungen 27 exzentrisch angeordnet sind (s. auch Fig. 5). Die Handhabe 13 wird am Arretierungsbolzen mittels eines Stiftes gehalten, der durch die Querbohrungen 27 und durch die Querbohrung des Arretierungsbolzens 21 getrieben wird.

Wie leicht zu erkennen ist, kann der Arretierungsbolzen 21 durch Kippen der Handhabe 13 aus der Bohrung 18 herausgehoben werden, so daß der Topf 11' mit der Stütze 4 frei gedreht werden kann. Nach der Drehung der Stütze in die andere Endlage rastet der Arretierungsbolzen 21 in die andere, nicht dargestellte Rastbohrung des Topfes 10' automatisch ein. Zweckmäßigerweise wird die Arretierungsvorrichtung 12' in der Nähe der Deichsel angebracht, so daß Deichsel und Handhabe gleichzeitig mit einer Hand greifbar sind. Die Handhabe kann aber auch mit 2 Händen erfolgen.

## Patentansprüche

1. Drehvorrichtung für eine z.B. an einer Fahrzeugdeichsel oder dgl. anbringbare Stütze (4), die mittels eines Drehkörpers, der an einem mit der Deichsel fest verbindbaren Halter angordnet ist, aus der horizontalen Lage in die vertikale Lage und umgekehrt verdrehbar und in beiden Lagen mittels einer Arretiervorrichtung (12, 12') feststellbar ist, wobei der Halter ein scheibenförmiges Element (11, 11') mit einem zentralen Drehzapfen (14) ist, wobei mit der Stütze (4) ein weiteres scheibenförmiges Element (10, 10') verbunden ist, das dem Halterelement (11, 11') ähnelt und mittig auf dem Drehzapfen (14) gelagert ist, und wobei eines der Elemente (11, 11'; 10, 10') mit mindestens zwei den Endlagen der Stütze (4) entsprechenden Rastausnehmungen (18) versehen ist, in die die Arretierungsvorrichtung (12, 12') automatisch eingreift,
**dadurch gekennzeichnet,**
**daß** beide Elemente als Töpfe (10', 11') ausgebildet sind, die - mit ihren offenen Seiten einander zugekehrt - ineinandergeschachtelt sind, wobei der Außendurchmesser des einen Topfes (10') geringfügig kleiner als der Innendurchmesser des anderen Topfes (11') ist.

2. Drehvorrichtung nach Anspruch 1,
**dadurch gekennzeichnet,**
**daß** das mit der Stütze (4) verbundene Element (10, 10') an der Stelle des Drehlagers einen zum Drehzapfen (14) hin vertieften Bereich aufweist.

3. Drehvorrichtung nach Anspruch 1 oder 2,
**dadurch gekennzeichnet,**
**daß** der andere Topf (11') den größeren Durchmesser aufweist, an seiner Topfwand (19) mit der Arretierungsvorrichtung (12') verbunden ist und an seiner Topfwand (19) eine Bohrung (20) zum Durchtritt eines Arretierungskörpers, vorzugsweise Arretierungsbolzens (21), aufweist und daß der weitere Topf (10') an seiner Topfwand (17) mit zwei die Rastausnehmungen darstellenden Bohrungen (18) für den Eingriff des Arretierungsbolzens (21) versehen ist.

4. Drehvorrichtung nach einem der Ansprüche 1 bis 3, bei der der Arretierungsbolzen (21) der Wirkung einer Feder (24) ausgesetzt und mittels einer Handhabe (13) gegen die Federwirkung aus den Raststellungen (18) ausrastbar ist und bei der die Arretierungsvorrichtung (21) eine den Arretierungsbolzen (21) aufnehmende Hülse (22) aufweist,
**dadurch gekennzeichnet,**
**daß** das eine Hülsenende mit dem anderen Topf (11') fest verbunden ist, daß das andere Hülsenende mit einer den Durchtritt des Arretierungsbolzens (21) ermöglichenden Schraubkappe (23) abgeschlossen ist, daß die Feder als Schraubendruckfeder (24) ausgebildet ist, um den Arretierungsbolzen gewunden und mit seinem einen Ende am Arretierungsbolzen (21) sowie mit seinem anderen Ende an der Schraubkappe (23) gelagert ist und daß die Handhabe (13) mit dem topffernen Ende des Arretierungsbolzens (21) verbunden ist.

5. Drehvorrichtung nach Anspruch 4,
**dadurch gekennzeichnet,**
**daß** das untere Ende der Handhabe (13) kreisscheibenförmig und als Gabel (26) ausgebildet ist und sich an der Schraubkappe (23) abstützt.

6. Drehvorrichtung nach Anspruch 4,
**dadurch gekennzeichnet,**
**daß** der Arretierungsbolzen (21) in der Gabel (26) mittels einer exzentrisch in der Gabelscheibe angeordneten Stiftverbindung (27) aufgenommen ist.

7. Drehvorrichtung nach Anspruch 6,
**dadurch gekennzeichnet,**
**daß** der Drehzapfen (14) im ersten oder zweiten Topf (10', 11') ausgebildet ist und der vertiefte Bereich (16) im zweiten oder ersten Topf (11', 10') ausgebildet ist.

## Claims

1. Rotary mechanism for a support (4), which is attachable, for example, to a vehicle towbar or the like and is rotatable, by means of a rotary body which is disposed on a holder securedly connectable to the towbar, from the horizontal position into the vertical position and vice versa and is securable in either position by means of a locking mechanism (12, 12'), the holder being a disc-shaped member (11, 11') with a central journal (14), an additional disc-shaped member (10, 10') being connected to the support (4), which additional member is similar to the retaining member (11, 11') and is mounted centrally on the journal (14), and one of the members (11, 11'; 10, 10') being provided with at least two locking recesses (18), which correspond to the end positions of the support (4), and the locking mechanism (12, 12') automatically engaging in said recesses, **characterised in that** both members are in the form of cups (10', 11') which - with their open sides facing one another - fit one in the other, the external diameter of one cup (10') being slightly smaller than the internal diameter of the other cup (11').

2. Rotary mechanism according to claim 1, **characterised in that** the member (10, 10'), which is connected to the support (4), has a region, which is recessed towards the journal (14), at the location of the rotary bearing.

3. Rotary mechanism according to claim 1 or 2, **characterised in that** the other cup (11') has the greater diameter, is connected to the locking mechanism (12') at its cup wall (19) and has a bore (20) in its cup wall (19) for a locking body, preferably locking pin (21), to pass therethrough, and **in that** the additional cup (10') is provided at its cup wall (17) with two bores (18), which represent the locking recesses, for the engagement of the locking pin (21).

4. Rotary mechanism according to one of claims 1 to 3, wherein the locking pin (21) is subjected to the action of a spring (24) and can be released from the locking positions (18) by means of a handle (13) in opposition to the effect of the spring, and wherein the locking mechanism (12) includes a sleeve (22), which accommodates the locking pin (21), **characterised in that** one sleeve end is securedly connected to the other cup (11'), **in that** the other sleeve end is terminated by a screw cap (23), which permits the locking pin (21) to pass therethrough, **in that** the spring is in the form of a compression spring (24), is wound around the locking pin and is mounted with one end on the locking pin (21) and with its other end on the screw cap (23), and **in that** the handle (13) is connected to the end of the locking pin (21) remote from the cup.

5. Rotary mechanism according to claim 4, **characterised in that** the lower end of the handle (13) has the configuration of a circular disc, is in the form of a fork (26) and is supported on the screw cap (23).

6. Rotary mechanism according to claim 4, **characterised in that** the locking pin (21) is accommodated in the fork (26) by means of a pin connection (27) disposed eccentrically in the fork disc.

7. Rotary mechanism according to claim 6, **characterised in that** the journal (14) is provided in the first or second cup (10', 11'), and the recessed region (16) is provided in the second or first cup (11', 10').

## Revendications

1. Mécanisme vireur destiné à un support (4) susceptible d'être par exemple installé sur un timon de véhicule ou analogue, qui peut être tordu de la position horizontale en position verticale et inversement, grâce à un corps de rotation disposé sur un élément d'appui relié de manière fixe au timon, et qui peut être fixé dans les deux positions grâce à un dispositif d'arrêt (12, 12'), moyennant quoi l'élément d'appui constitue un élément en forme de disque (11, 11') doté d'un boulon de verrouillage central (14), où un autre élément en forme de disque (10, 10') est relié au support (4), lequel élément ressemble à l'élément d'appui (11, 11') et est positionné au milieu du boulon de verrouillage (14), et où un des éléments (11, 11' ; 10, 10') est équipé d'au moins deux évidements de crantage (18) correspondant aux positions d'extrémité du support (4), mécanisme qui vient automatiquement en prise avec le dispositif d'arrêt (12, 12'),
**caractérisé en ce que**
les deux éléments sont conçus comme des creusets (10', 11') qui s'emboîtent, leurs extrémités ouvertes étant adjacentes l'une à l'autre, moyennant quoi le diamètre extérieur dudit un creuset (10') est légèrement inférieur au diamètre intérieur de l'autre creuset (11').

2. Mécanisme vireur selon la revendication 1, **caractérisé en ce que** l'élément (10, 10') relié au support (4) présente à l'endroit du coussinet de pivotement une zone creusée vers l'intérieur pour le boulon de verrouillage (14).

3. Mécanisme vireur selon la revendication 1 ou la revendication 2, **caractérisé en ce que** ledit un creuset (11') présente le diamètre le plus grand, est relié au niveau de sa paroi de creuset (19) au dispositif d'arrêt (12') et présente au niveau de sa paroi de creuset (19) un alésage (20) pour favoriser le passage d'un élément d'arrêt, de préférence un boulon d'arrêt (21), et **en ce que** l'autre creuset (10') est doté au niveau de sa paroi de creuset (17) de deux alésages (18) représentant les évidements de crantage qui permettent la mise en prise avec le boulon d'arrêt (21).

4. Mécanisme vireur selon l'une quelconque des revendications 1 à 3, dans lequel le boulon d'arrêt (21) est soumis à l'action d'un ressort (24) et peut être dégagé des positions des crans d'arrêt(18) au moyen d'une manette (13) de manière à s'opposer à l'action du ressort, et dans lequel le dispositif d'arrêt (21) présente une douille (22) recevant le boulon d'arrêt (21),
**caractérisé en ce que** ladite une extrémité de la douille est reliée de manière fixe à l'autre creuset (11'), et **en ce que** l'autre extrémité de la douille est bouchée par un bouchon fileté (23) permettant le passage du boulon d'arrêt (21), **en ce que** le ressort est conçu comme ressort cylindrique de pression tournant autour du boulon d'arrêt, est positionné de manière à ce que l'une de ses extrémités se trouve au niveau du boulon d'arrêt (21) et que son autre extrémité se trouve au niveau du bouchon fileté (23), et **en ce que** la manette (13) est reliée à l'extrémité éloignée du boulon d'arrêt (21).

5. Mécanisme vibreur selon la revendication 4, **caractérisé en ce que** l'extrémité inférieure de la manette (13) est conçue en forme de disque circulaire comme une fourche (26) et s'appuie contre le bouchon fileté (23).

6. Mécanisme vireur selon la revendication 4, **caractérisé en ce que** le boulon d'arrêt (21) est reçu dans la fourche (26) au moyen d'un assemblage par tige (27) disposé dans le disque de fourche.

7. Mécanisme vireur selon la revendication 6, **caractérisé en ce que** le boulon de verrouillage (14) est formé dans le premier ou le deuxième creuset (10', 11') et **en ce que** la zone creusée (16) est formée dans le deuxième ou le premier creuset (11', 10').
